# EUROPÄISCHE PATENTSCHRIFT

(11) **EP 2 609 005 B1**
(45) Veröffentlichungstag und Bekanntmachung des Hinweises auf die Patenterteilung: **14.11.2018**
(21) Anmeldenummer: 11821143.2
(22) Anmeldetag: 02.08.2011
(51) Int. Cl.: B60J 7/02, B63B 43/02, B63B 43/10

(54) **VORRICHTUNG ZUR STABILISIERUNG VON SCHIFFEN ÜBER AUFBLASBARE AUFTRIEBSKÖRPER**
APPARATUS FOR STABILIZATION OF MARINE VESSELS BY MEANS OF INFLATABLE BUOYANT BODIES
DISPOSITIF DE STABILISATION DE BATEAUX À L'AIDE DE CORPS FLOTTABLES GONFLABLES

(30) Priorität: 28.08.2010 DE 102010035749
(43) Veröffentlichungstag der Anmeldung: 03.07.2013
(73) Patentinhaber: ArianeGroup GmbH, 82024 Taufkirchen (DE)
(72) Erfinder: LANGER, Thomas, 28844 Weyhe (DE); VON OSTROWSKI, Thorge, 27356 Rotenburg (Wümme) (DE)
(74) Vertreter: Marschall, Stefan
(86) Internationale Anmeldenummer: PCT/DE2011/001546
(87) Internationale Veröffentlichungsnummer: WO 2012/028133

(56) Entgegenhaltungen:
- WO-A1-99/47452
- DE-A1- 3 900 572
- DE-A1- 19 911 858
- US-A- 3 222 230

## Beschreibung

Die Erfindung betrifft ein Schiff mit einer Vorrichtung zur Stabilisierung, mit einem aufblasbaren Auftriebskörper in Ballonform als Rettungseinrichtung, wobei zur Befüllung der Auftriebskörper Erzeuger von Gas mit komprimiert gespeicherten Gasen angeordnet sind.
Vorrichtungen dieser Art sind beispielsweise aus der DE 199 21 670 A1, der DE 3 227 348 A1 und der DE 3 421 904 A1 als Auftriebshilfen bzw. Seenotrettungseinrichtungen auf der Basis von Druckgassystemen bekannt geworden. Üblicherweise werden hierbei Kaltgassysteme, basierend auf komprimiert gespeicherten Gasen, wie Stickstoff, Helium, Kohlendioxid, Druckluft oder dergleichen, verwendet, mit denen Auftriebskörper, die typischerweise eine Ballonform aufweisen, aufgeblasen werden. Der Einsatz solcher Auftriebshilfen ist allerdings insofern auf kleinere Schiffe beschränkt, als die zur Stabilisierung von großen Schiffen erforderliche Gasmenge aus Druckflaschen in der Regel nicht schnell erzeugbar ist. Anwendungen für Schiffe mit mehr als ca. 30 Meter Länge sind daher bislang nicht bekannt geworden. Problematisch bei einer Verwendung eines solchen Kaltgassystems kann außerdem die Abkühlung des Druckgases aufgrund seiner Expansion sein.

Es sind bereits Anordnungen gemäß DE 39 00 572 C2 bekannt, die eine Verwendung von Gasgeneratoren der genannten Art im Zusammenhang mit Rettungssystemen für Unterwasserfahrzeuge und zur Bergung von Unterwasserkörpern mit Hilfe gasgefüllter Ballons aufweisen. Die zu diesem Zweck verwendeten Gasgeneratoren basieren in der Regel auf Triebwerkstechnologien aus der Raumfahrt und bestehen aus Gaserzeugungssystemen auf der Basis der katalytischen Zersetzung eines flüssigen Energieträgers, vorzugsweise Hydrazin oder der Verbrennung von Feststoffen. Daneben sind aber auch Systeme bekannt geworden, bei denen das Auftriebsgas durch die chemische Reaktion eines festen Energieträgers, beispielsweise Lithiumhydrid, mit dem umgebenden Seewasser erzeugt wird. Ein Problem bei derartigen Systemen ist, daß auf reaktiven Substanzen basierende Gasgeneratoren typischerweise Abgastemperaturen oberhalb von 1000 K und mehr aufweisen, was zu einer Beschädigung bzw. Zerstörung der als Auftriebskörper verwendeten Ballonhülle führen kann. Aus der US 3 222 230 A ist eine Vorrichtung für ein Schiff bekannt, wobei zur Befüllung der aufblasbaren Auftriebskörper Gas dadurch erzeugt wird, dass Flüssiggas in einem Speicher mit Heißgase aus einem Heißgaserzeuger kombiniert werden. Aufgabe der Erfindung ist es daher, eine Vorrichtung der eingangs genannten Art so auszubilden, daß sie in der Lage ist, auch große Auftriebskörper innerhalb möglichst kurzer Zeit mit Druckgas zu füllen.

Die Erfindung löst diese Aufgabe durch ein Schiff gemäß Anspruch 1. Durch die erfindunsgemäß vorgesehene kombinierte Verwendung von Heiß- und Kaltgas, bei der das Heißgas als Energiequelle genutzt wird, um eine rasche Expansion des Kaltgases zu ermöglichen, erlaubt das Füllen eines großen Auftriebskörpers und damit die Erzeugung eines großen Auftriebes innerhalb weniger Sekunden und ermöglicht so die Anwendung einer solchen Auftriebshilfe auch bei großen Schiffen und insbesondere bei Gefahrgutschiffen. Ferner ist die Vorrichtung erfindungsgemäß für eine Stabilisierung von Fähren und/oder Handelsschiffen und für das Heben von Schwerlasten vom Meeresgrund einsetzbar. Als Heißgasquelle können dabei alle in der Feststoff- oder Flüssigstoff-Raketentechnik verwendeten Mischungen Verwendung finden.

Der Vorteil der erfindunsgemäßen Vorrichtung liegt insbesondere darin, daß die Gastemperatur derart gewählt werden kann, daß einerseits das Material des Auftriebskörpers diese Gastemperatur noch ohne Beschädigung verträgt, daß andererseits die Gasraumtemperatur jedoch noch hoch genug ist, um große Gasvolumina in kürzester Zeit zu füllen. Auf diese Weise können mit der Vorrichtung erheblich schnellere Aufblaszeiten erzielt werden als dies mit einem reinen Druckgas-System möglich wäre.

Die Vorrichtung nach der Erfindung basiert auf Technologien, wie sie prinzipiell von Raumfahrttriebwerken bekannt sind, und ist beispielsweise in der Lage, bei einem Einbauvolumen von nur ca. 0.25 Kubikmetern unter Atmosphärendruck innerhalb von 15 Sekunden ein Heißgasvolumen von 500 Kubikmetern zu erzeugen. Vorzugsweise ist ein Auftriebskörper insbesondere in Form eines Ballons an die Befüll-Leitung der erfindungsgemäßen Vorrichtung angeschlossen. Bei einer Aktivierung der erfindungsgemäßen Vorrichtung, beispielsweise durch ein elektrisches Aktivierungssignal, wird dieser Ballon zunächst innerhalb der ersten Sekunden nur mit Druckgas aufgeblasen, so daß sich zunächst ein Kaltgasvolumen zum Schutz der Ballonhülle bildet. Anschließend wird verzögert der Heißgas-Erzeuger aktiviert. Die Erfindung weist dabei den Vorteil auf, daß zum einen die Abgastemperatur so kontrolliert werden kann, daß die Ballonhülle keinen Schaden nimmt, zum anderen wird die Entleerungszeit und damit die Betriebsdauer einer Druckgasflasche mit einem integrierten Gasgenerator gemäß der Erfindung im Vergleich zu einer Druckgasflasche ohne einen derartigen Gasgenerator deutlich verbessert.

Im Rahmen der Erfindung sind unterschiedliche Kombinationen von Heißgas- und Kaltgasquellen möglich. Auf diese Weise können Kaltgas- und Heißgas-Anteile so miteinander gemischt werden, daß sie mit einer vorgebbaren Mischungstemperatur in die Ballonhülle einströmen. Sollte es dennoch bei einem Heißgas-Erzeuger auf der Basis von Feststoffen zu einem unkontrollierten Abbrand und damit zu unzulässig hohen Drücken kommen, so würde eine in weiterer Ausgestaltung der erfindungsgemäßen Vorrichtung vorgesehene Überdrucksicherung für die Sicherheit der Anordnung sorgen.

Vorteilhafte Ausbildungen der Erfindung sind durch die Merkmale der Unteransprüche gekennzeichnet.

Die mit der Vorrichtung gemäß der Erfindung gefüllten Auftriebskörper können im Bedarfsfall durch die Erzeugung von zusätzlichem Auftrieb die Stabilität eines Schiffes aufrecht erhalten und so einer Krängung bzw. einer Schlagseite des Schiffes entgegenwirken. Die Erfindung kann dabei in unterschiedlichen Szenarien eingesetzt werden, unter anderem auch als präventive Installation an entsprechender Stelle an Bord eines Schiffes, in Form einer Zusatzausrüstung für Schiffe der Küstenwache bzw. an Bord von Spezialschiffen für die Bergung und Seenotrettung, aber auch in Form einer Spezialausrüstung für das Heben von Wracks. Die Auftriebskörper können im Fall kleinerer Fischerboote innerhalb von ca. 20 Sekunden, im Fall größerer Schiffe, wie großer Tankschiffe, innerhalb von ca. 60 Sekunden aufgeblasen werden. Die benötigten Gasvolumina liegen dabei zwischen etwa 20 und mehreren 100 Kubikmetern.

In den Zeichnungen sind Ausführungsbeispiele der Erfindung schematisch dargestellt. Es zeigen:
- Fig. 1: eine Darstellung einer ersten Anordnung zur Befüllung von Auftriebskörpern,
- Fig. 2: eine Darstellung einer zweiten Anordnung und
- Fig. 3: eine Darstellung einer dritten Anordnung.

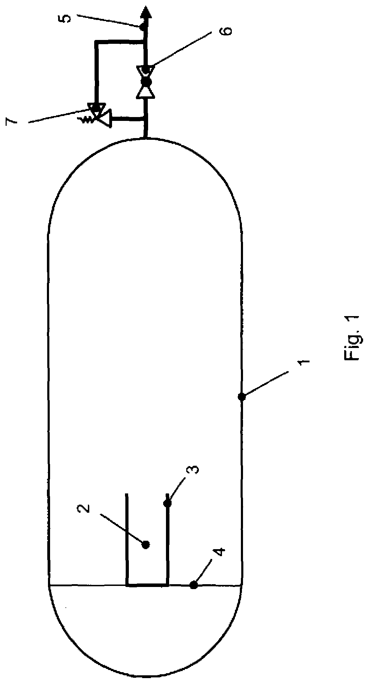

Bei der in Fig. 1 schematisch dargestellten Anordnung sind zur Befüllung eines Auftriebskörpers in Form eines aus einem Polymer bestehenden Ballons ein Druckgas-Speicher 1 und in diesem ein Heißgas-Erzeuger 2 vorgesehen. Der Heißgas-Erzeuger 2 besteht aus einem pyrotechnischen Satz, der als Festtreibstoff-Kartusche in einem Gehäuse 3 angeordnet ist, das seinerseits über eine Halterung 4 im Inneren des Druckgas-Speichers 1 befestigt ist. Der Druckgas-Speicher 1 ist über eine Befüll-Leitung 5 mit einem Entnahmeventil 6 mit dem in der Figur nicht dargestellten Auftriebskörper verbunden, wobei in das Leitungssystem ferner eine Überdruck-Sicherung 7 integriert ist.

Im Fall des hier beschriebenen Ausführungsbeispiels ist das Material des als Auftriebskörper dienenden Ballons bis zu einer maximalen Temperatur von ca. 230°C oder 500 K stabil. Bei einer ca. 5 mm starken Ballonhülle, die im eingetauchten Zustand vollständig von ca. 10°C warmem Seewasser umhüllt ist, darf eine maximale Gasraumtemperatur innerhalb des Ballons von 1000K nicht überschritten werden.

Bei diesen Temperaturverhältnissen sorgt der Wärmeaustausch dafür, daß die Ballonhülle eine Temperatur von 500K innenseitig nicht überschreitet.

Der pyrotechnische Satz des Heißgas-Erzeugers 2 ist derart dimensioniert, daß bei einer Aktivierung der Anordnung, d.h., bei einem Öffnen des Entnahmeventils und dem Zünden des pyrotechnischen Satzes, die Abkühlung des Druckgases durch die Wärmeerzeugung des pyrotechnischen Satzes ausgeglichen wird, so daß eine Expansion bei konstanter Gastemperatur stattfinden kann. Da der pyrotechnische Satz nicht nur eine Wärme-, sondern auch eine Gasmassen-Quelle darstellt, kann der pyrotechnische Satz auch so dimensioniert werden, daß der Druck innerhalb des Druckgas-Speichers 1 entweder konstant bleibt oder aber sogar ansteigt.

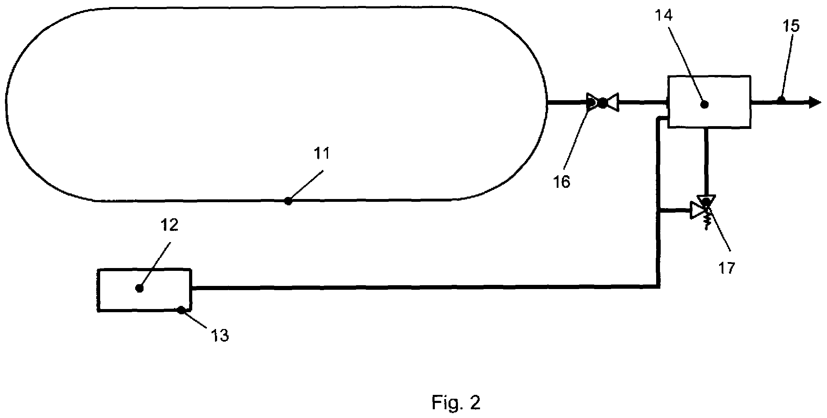

Bei der in Fig. 2 dargestellten alternativen Anordnung ist ein Heißgas-Erzeuger 12 vorgesehen, der in diesem Fall in einem Gehäuse 13 außerhalb Druckgas-Speichers 11 angeordnet ist. Bei dem Heißgas-Erzeuger 12 handelt es sich in diesem Fall um einen bereits aus der Raketentechnik bekannten Gasgenerator auf der Basis katalytisch zersetzbarer Stoffe, wobei alternativ auch eine Kombination von Feststoff und Flüssigstoff einsetzbar ist.

Die Gase des Heißgas-Erzeugers 12 und das vom Druckgas-Speicher 12 gelieferte Kaltgas werden in einer Mischkammer 14 zusammengeführt, wo die gewünschte Abgastemperatur für den Auftriebskörper eingestellt wird. Der Druckgas-Speicher 11 ist bei dieser Anordnung über ein Entnahmeventil 16 mit der Mischkammer 14 verbunden. Auch bei dieser Anordnung ist in das Leitungssystem der Befüll-Leitung 15 eine Überdruck-Sicherung 17 integriert.

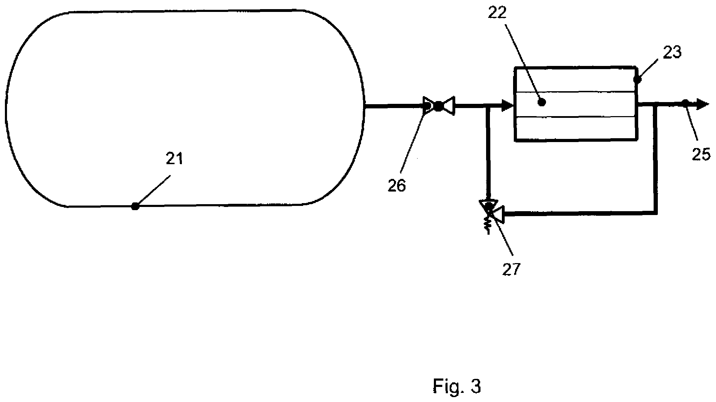

Bei dem in Fig. 3 dargestellten dritten Ausführungsbeispiel ist schließlich ein Heißgas-Erzeuger 22 in das Gehäuse 23 einer Mischkammer integriert, wobei die Mischkammer als Durchströmungskanal in Form eines Rohr- oder Stern-Innenbrenners ausgebildet ist. Ein Druckgas-Speicher 21 ist über ein Entnahmeventil 26 mit der Mischkammer 23 verbunden, die wiederum über eine Befüll-Leitung 25 mit dem nicht dargestellten Auftriebskörper verbunden ist, wobei in das Leitungssystem auch in diesem Fall eine Überdruck-Sicherung 27 integriert ist.

Der Heißgas-Erzeuger besteht bei dieser Anordnung aus einem pyrotechnischen Satz. Bei der Verwendung eines Druckgases mit oxidativen Eigenschaften kann anstelle eines pyrotechnischen Satzes auch ein Festbrennstoff Anwendung finden, was dem Prinzip der Hybrid-Raketentechnologie mit einem deutlich erhöhten Oxidatoranteil entsprechen würde.

## Patentansprüche

1. Schiff mit einer Vorrichtung zur Stabilisierung, die einen aufblasbaren Auftriebskörper in Ballonform als Rettungseinrichtung sowie zur Befüllung des Auftriebskörpers einen Erzeuger von Gas umfasst, wobei als Erzeuger von Gas ein Druckgas-Speicher (1, 11, 21) mit einem Heißgas-Erzeuger (2, 12, 22) kombiniert ist, wobei die Vorrichtung dazu eingerichtet ist, bei einer Aktivierung den Auftriebskörper zunächst innerhalb der ersten Sekunden nur mit Druckgas aufzublasen und anschließend den Heißgas-Erzeuger zu aktivieren.

2. Schiff nach Anspruch 1, **dadurch gekennzeichnet, daß** der Heißgas-Erzeuger (2) innerhalb des Druckgas-Speichers (1) angeordnet ist.

3. Schiff nach Anspruch 1, **dadurch gekennzeichnet, daß** der Heißgas-Erzeuger (12, 22) außerhalb des Druckgas-Speichers (11, 21) angeordnet ist.

4. Schiff nach Anspruch 3, **dadurch gekennzeichnet, daß** der Heißgas-Erzeuger (22) in eine Mischkammer (23) integriert ist.

5. Schiff nach einem der Ansprüche 1 bis 4, **dadurch gekennzeichnet, daß** der Heißgas-Erzeuger (12) auf der katalytischen Zersetzung eines flüssigen Energieträgers basiert.

6. Schiff nach Anspruch 5 **dadurch gekennzeichnet, daß** der flüssige Energieträger aus Hydrazin besteht.

7. Schiff nach einem der Ansprüche 1 bis 4, **dadurch gekennzeichnet, daß** im Heißgas-Erzeuger (22) das Auftriebsgas durch die chemische Reaktion eines festen Energieträgers mit dem umgebenden Seewasser erzeugbar ist.

8. Schiff nach Anspruch 7, **dadurch gekennzeichnet, daß** der feste Energieträger aus Lithiumhydrid besteht.

9. Schiff nach einem der Ansprüche 1 bis 4, **dadurch gekennzeichnet, daß** im Heißgas-Erzeuger (22) das Auftriebsgas durch die Verbrennung eines festen oder flüssigen Energieträgers erzeugbar ist.

10. Schiff nach einem der Ansprüche 1 bis 9, **dadurch gekennzeichnet, daß** der Druckgas-Speicher (1, 11, 21) mit einem komprimierten Gas, wie Stickstoff, befüllt ist.

11. Schiff nach einem der Ansprüche 1 bis 10, **dadurch gekennzeichnet, daß** der Heißgas-Erzeuger (2, 12, 22) derart dimensioniert ist, daß bei einer Aktivierung der Vorrichtung die Abkühlung des Druckgases durch die Wärmeerzeugung des Heißgas-Erzeugers (2, 12, 22) ausgleichbar ist.

12. Schiff nach einem der Ansprüche 1 bis 11, **dadurch gekennzeichnet, daß** der Heißgas-Erzeuger (2, 12, 22) derart dimensioniert ist, daß bei einer Aktivierung der Vorrichtung der Druck innerhalb der Druckgas-Speicher (1, 11, 21) durch die Wärme- und Gaserzeugung des Heißgas-Erzeugers (2, 12, 22) konstant bleibt.

13. Schiff nach einem der Ansprüche 1 bis 11, **dadurch gekennzeichnet, daß** der Heißgas-Erzeuger (2, 12, 22) derart dimensioniert ist, daß bei einer Aktivierung der Vorrichtung der Druck innerhalb der Druckgas-Speicher (1, 11, 21) durch die Wärme- und Gaserzeugung des Heißgas-Erzeugers (2, 12, 22) entsprechend den Anforderungen steigend oder fallend ist.

## Claims

1. A ship with a device for stabilisation, which comprises an inflatable buoyancy body in balloon form as a rescue device and a gas generator for filling the buoyancy body, wherein as a gas generator a compressed gas storage unit (1, 11, 21) is combined with a hot gas generator (2, 12, 22), wherein the device is set up such that, when activated, it first inflates the buoyancy body only with compressed gas within the first seconds and then activates the hot gas generator.

2. The ship according to claim 1, **characterised in that** the hot gas generator (2) is arranged inside the compressed gas storage unit (1).

3. The ship according to claim 1, **characterised in that** the hot gas generator (12, 22) is arranged outside the compressed gas storage unit (1).

4. The ship according to claim 3, **characterised in that** the hot gas generator (22) is integrated into a mixing chamber (23).

5. The ship according to any one of claims 1 to 4, **characterised in that** the hot gas generator (12) is based on the catalytic decomposition of a liquid energy carrier.

6. The ship according to claim 5, **characterised in that** the liquid energy carrier comprises hydrazine.

7. The ship according to any one of claims 1 to 4, **characterised in that** the buoyancy gas can be generated in the hot gas generator (22) by the chemical reaction of a solid energy carrier and the surrounding sea water.

8. The ship according to claim 7, **characterised in that** the solid energy carrier comprises lithium hydride.

9. The ship according to any one of claims 1 to 4, **characterised in that** the buoyancy gas can be generated in the hot gas generator (22) by the combustion of a solid or liquid energy carrier.

10. The ship according to any one of claims 1 to 9, **characterised in that** the compressed gas storage unit (1, 11, 21) is filled with compressed gas, such as nitrogen.

11. The ship according to any one of claims 1 to 10, **characterised in that** the hot gas generator (2, 12, 22) is dimensioned such that, when the device is activated, the cooling down of the compressed gas can be compensated for by the heat generation of the hot gas generator (2, 12, 22).

12. The ship according to any one of claims 1 to 11, **characterised in that** the hot gas generator (2, 12, 22) is dimensioned such that, when the device is activated, the pressure inside the compressed gas storage unit (1, 11, 21) remains constant as a result of the heat and gas generation of the hot gas generator (2, 12, 22).

13. The ship according to any one of claims 1 to 11, **characterised in that** the hot gas generator (2, 12, 22) is dimensioned such that, when the device is activated, the pressure inside the compressed gas storage unit (1, 11, 21) is rising or falling according to requirements as a result of the heat and gas generation of the hot gas generator (2, 12, 22).

## Revendications

1. Bateau, pourvu d'un dispositif de stabilisation, qui comprend un corps flottant gonflable sous la forme d'un ballon, faisant office de système de sauvetage, ainsi que pour le remplissage du corps flottant, un générateur de gaz, en tant que générateur de gaz, un accumulateur de gaz sous pression (1, 11, 21) étant associé avec un générateur de gaz chaud (2, 12, 22), le dispositif étant aménagé pour, lors d'une activation du corps flottant, dans les premières secondes ne gonfler qu'avec du gaz sous pression et pour activer par la suite le générateur de gaz chaud.

2. Bateau selon la revendication 1, **caractérisé en ce que** le générateur de gaz chaud (2) est placé à l'intérieur de l'accumulateur de gaz sous pression (1).

3. Bateau selon la revendication 1, **caractérisé en ce que** le générateur de gaz chaud (12, 22) est placé à l'extérieur de l'accumulateur de gaz sous pression (11, 21) .

4. Bateau selon la revendication 3, **caractérisé en ce que** le générateur de gaz chaud (22) est intégré dans une chambre de mélange (23).

5. Bateau selon l'une quelconque des revendications 1 à 4, **caractérisé en ce que** le générateur de gaz chaud (12) est basé sur la décomposition catalytique d'un vecteur d'énergie liquide.

6. Bateau selon la revendication 5, **caractérisé en ce que** le vecteur d'énergie liquide consiste dans de l'hydrazine.

7. Bateau selon l'une quelconque des revendications 1 à 4, **caractérisé en ce que** dans le générateur de gaz chaud (22), le gaz de sustentation peut être généré par la réaction chimique d'un vecteur d'énergie solide avec l'eau de mer environnante.

8. Bateau selon la revendication 7, **caractérisé en ce que** le vecteur d'énergie solide consiste dans de l'hydrure de lithium.

9. Bateau selon l'une quelconque des revendications 1 à 4, **caractérisé en ce que** dans le générateur de gaz chaud (22), le gaz de sustentation peut être généré par la combustion d'un vecteur d'énergie solide ou liquide.

10. Bateau selon l'une quelconque des revendications 1 à 9, **caractérisé en ce que** l'accumulateur de gaz sous pression (1, 11, 21) est rempli d'un gaz comprimé, comme de l'azote.

11. Bateau selon l'une quelconque des revendications 1 à 10, **caractérisé en ce que** le générateur de gaz chaud (2, 12, 22) est dimensionné de telle sorte que lors d'une activation du dispositif, le refroidissement du gaz sous pression puisse être compensé par la génération de chaleur du générateur de gaz chaud (2, 12, 22).

12. Bateau selon l'une quelconque des revendications 1 à 11, **caractérisé en ce que** le générateur de gaz chaud (2, 12, 22) est dimensionné de telle sorte, que lors d'une activation du dispositif, la pression à l'intérieur de l'accumulateur de gaz sous pression (1, 11, 21) reste constante sous l'effet de la génération de chaleur et de gaz par le générateur de gaz chaud (2, 12, 22).

13. Bateau selon l'une quelconque des revendications 1 à 11, **caractérisé en ce que** le générateur de gaz chaud (2, 12, 22) est dimensionné de telle sorte que lors d'une activation du dispositif, la pression à l'intérieur de l'accumulateur de gaz sous pression (1, 11, 21) soit en augmentation ou en chute, en fonction des exigences, sous l'effet de la génération de chaleur et de gaz par le générateur de gaz chaud (2, 12, 22).
